# EUROPEAN PATENT SPECIFICATION

(11) **EP 2 679 091 B1**
(45) Date of publication and mention of the grant of the patent: **21.06.2017**
(21) Application number: 13173769.4
(22) Date of filing: 26.06.2013
(51) Int. Cl.: A01K 89/01

(54) **Fishing reel and method of operating said fishing reel**
Angelspule und Verfahren zum Betrieb dieser Angelspule
Moulinet de pêche et procédé de fonctionnement de ce moulinet

(30) Priority: 27.06.2012 JP 2012144088
(43) Date of publication of application: 01.01.2014
(73) Proprietor: Globeride, Inc., Higashikurume-shi Tokyo 203-8511 (JP)
(72) Inventor: Horie, Hironori, Tokyo 203-8511 (JP)
(74) Representative: Beck Greener

(56) References cited:
- EP-A1- 2 210 486
- JP-A- 2006 204 153
- US-A- 4 883 238
- US-A- 5 333 813

## Description

The present invention relates to a fishing reel and a method of operating a fishing reel.

In embodiments, the present invention relates to a fishing reel having a fishing line locking mechanism for stopping a fishing line being released, at a desired position.

In many cases, a fishing reel includes a stopper member (line stopper) made of a resin for locking the end of a fishing line wound around a spool, thereby preventing the fishing line from unwinding from the spool.

Among fishing reels, spinning reels are often used for still fishing and trolling; in still fishing, fishing tackle is cast before waiting; and in trolling, fishing tackle or a lure is cast and wound up. When a Nylon™ line or a fluorocarbon line without markings of line length such as color-coding of a polyethylene (PE) line is wound around a spool, the amount of line (the line length) released from the spool by a long cast can be roughly presumed based on the position where the fishing tackle enters water or the position where the line appears from water; however, it requires a skill to cast the fishing tackle to the same point again. Meanwhile, in boat fishing and floating fishing, the length of a fishing line released from the spool with a bail raised can be known only by sense; and it is difficult to reach a desired fishing depth by a method other than winding up from the bottom. Further, it is not easy to place fishing tackle into these positions or the fishing depth again.

Therefore, users are trying to repeatedly reach a same fishable point or depth by using the above mentioned stopper member, that is, by locking the fishing line on the stopper member at the timing of catching a fish in winding up the reel and then resuming winding up the fishing line in such a state. However, a conventional stopper member works only as a line stopper that simply nips a fishing line in a slit; when used for stopping a fishing line being released, such a stopper member may subject the fishing line to a sudden load upon stopping the fishing line at the portion locked by the stopper member, causing the fishing line to stretch or twist and to degrade, although the fishing line may not be broken due to bending of the rod.

To overcome this problem, for example, Japanese Patent Application Publication No. 2010-166852 (the "'852 Publication") discloses a technique wherein a stopper mechanism is positioned on an outer circumferential surface of a rear flange (skirt portion) of a spool on the drag knob side such that, when a load is imparted on the locked fishing line, a locking part of the stopper mechanism elastically moves along with the fishing line to absorb the load. In this stopper mechanism, the locking part has, for example, a boss shape (the shape of a spinning top) wherein a cylindrical shaft is provided on the middle of a disk; and the shaft is fitted into the spool and is biased by a spring in the spool in a direction opposite to the drag knob (i.e., in the direction opposite to the direction of releasing the fishing line).

Commonly owned document EP-A-2,210,486 discloses a fishing reel having a clipping apparatus that is moveable in the line releasing direction. When locked into the clipping apparatus, the fishing line is held between the surface of a skirt portion of the spool and a damper member forming part of the clipping apparatus.

In many cases, a spool of a fishing spinning reel is formed of a metal such as aluminum. The locking part of the stopper mechanism of the '852 Publication, which is formed of a hard resin or metal for strength, has a resin collar at a portion located inside the disk and contacting the fishing line such that the resin collar supports the fishing line. When a fishing line is locked by the stopper mechanism, the fishing line runs from the spool to turn round the locking part and returns to the spool.

Accordingly, the fishing line contacts the locking part and the spool at a portion where it is nipped between an edge of the disk of the locking part and an edge of a step formed in the spool, the step being formed to position the locking part on the spool so as to be movable. When the fishing line is released to the locking part, the load caused by the force of releasing the fishing line is imparted on the fishing line at the above portion, and the fishing line is moved forward (in the direction of releasing the fishing line) along with the locking part while being nipped between the edge of the disk and the edge of the spool. As a result of this movement, a same portion of the fishing line is repeatedly pressurized and rubbed for the number of times that the user stops releasing the fishing line by using the locking part. Therefore, the fishing line may be twisted, scratched, or altered in sectional shape (deformation). Further, finishing conditions of the edge of the portion in the spool that locks the fishing line may also be related to scratches in the fishing line. Therefore, proper rounding of the edge and careful removal of burr are required, in addition to simple shaving.

According to a first aspect of the present invention as detailed in claim 1, there is provided a fishing reel having a spool for winding a fishing line, comprising: a hook positioned on a portion of an outer circumferential surface of the spool where no fishing line is wound, the hook being configured to be movable in a direction of releasing the fishing line; a collar provided between the hook and the outer circumferential surface of the spool, the collar being configured to lock the fishing line in cooperation with the hook; and a biasing part configured to bias the hook and the collar in a direction opposite to a direction of releasing the fishing line, wherein, when the fishing line is released to a locked point where the fishing line is locked between the hook and the collar, the hook and the collar are moved integrally with the fishing line in the direction of releasing the fishing line under a biasing force produced by the biasing part, and wherein the collar faces the lower surface of the hook and comprises: a cylindrical tube fitting around a shaft provided on the hook; a planar part for receiving the fishing line being locked; and an engagement part provided in periphery and having a semicircular curved shape with a hollow section, the engagement part being configured to retain the fishing line by bending, and the engagement part is positioned high enough such that, when the engagement part bends while retaining the fishing line, the fishing line does not contact the outer circumferential surface of the spool.

A fishing reel is provided including a stopper mechanism that prevents damage on a fishing line and permits releasing a desired length of fishing line.

Preferably, the collar is positioned on a mounting surface, the mounting surface being formed in the outer circumferential surface of the spool so as to make a lower step, and the engagement part of the collar has, at a peripheral edge thereof, a guide surface for admitting the fishing line smoothly to inside the engagement part.

According to a second aspect of the present invention as detailed in claim 3, there is provided A method of operating a fishing line on a fishing reel having a spool comprising a hook positioned on a portion of an outer circumferential surface of the spool where no fishing line is wound, the hook being configured to be movable in a direction of releasing the fishing line, and a collar provided between the hook and the outer circumferential surface of the spool, the collar being configured to lock the fishing line in cooperation with the hook, the method comprising: biasing the hook and the collar in a direction opposite to a direction of releasing the fishing line; and, when the fishing line is released to a locked point where the fishing line is locked between the hook and the collar, moving the hook and the collar integrally with the fishing line in the direction of releasing the fishing line under a biasing force, and wherein the collar faces the lower surface of the hook and comprises: a cylindrical tube fitting around a shaft provided on the hook; a planar part for receiving the fishing line being locked; and an engagement part provided in periphery and having a semicircular curved shape with a hollow section, the engagement part being configured to retain the fishing line by bending, and the engagement part is positioned high enough such that, when the engagement part bends while retaining the fishing line, the fishing line does not contact the outer circumferential surface of the spool.

A fishing reel is provided that has a spool for winding a fishing line and comprises: a hook positioned on a portion of an outer circumferential surface of the spool where no fishing line is wound, the hook being configured to be movable in a direction of releasing the fishing line; a collar provided between the hook and the outer circumferential surface of the spool, the collar being configured to lock the fishing line in cooperation with the hook; and a biasing part configured to bias the hook and the collar in a direction opposite to a direction of releasing the fishing line, wherein, when the fishing line is released to a locked point where the fishing line is locked between the hook and the collar, the hook and the collar are moved integrally with the fishing line in the direction of releasing the fishing line under a biasing force produced by the biasing part.

A fishing reel is provided including a stopper mechanism that prevents damage on a fishing line and permits releasing a desired length of fishing line.

Embodiments of the present invention will now be described in detail with reference to the accompanying drawings, in which:
Fig. 1 shows an entire exterior view of a fishing spinning reel according to an embodiment of the present invention;
Fig. 2 shows an exterior view of a stopper mechanism provided to a spool according to a first embodiment; and
Fig. 3a is a sectional view showing the stopper mechanism viewed in the direction of A-A in Fig. 2, the stopper mechanism locking a fishing line;
Fig. 3b is a sectional view showing the stopper mechanism being under load.

Embodiments of the present invention will now be described in detail with reference to the drawings.

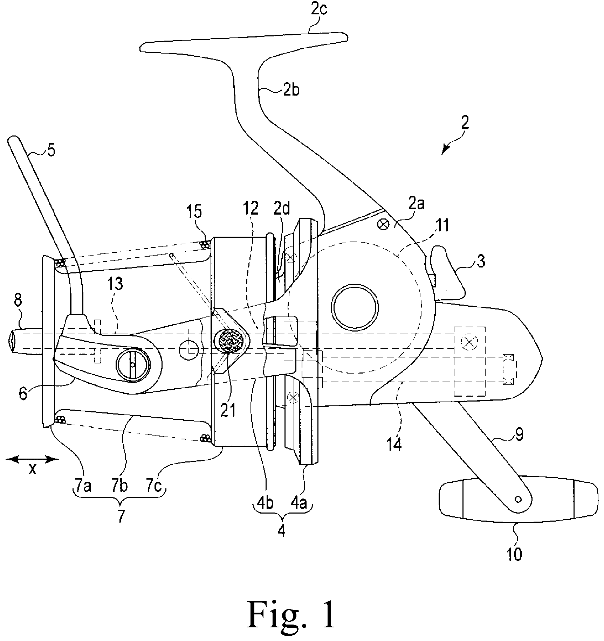

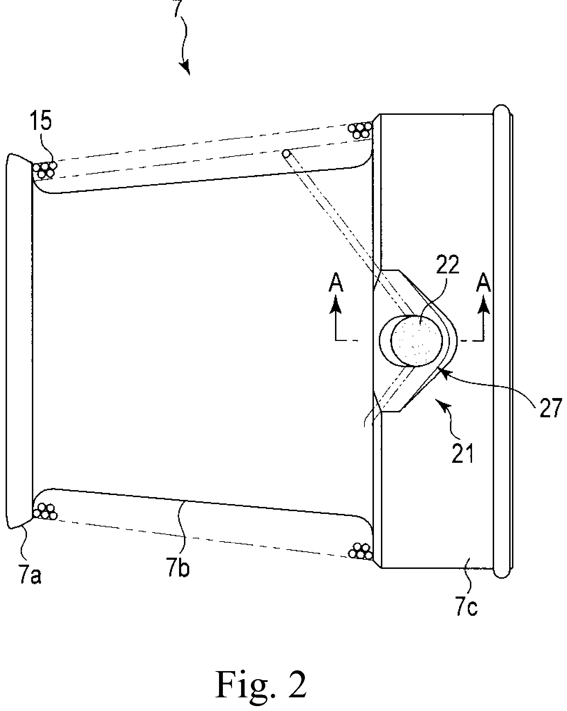

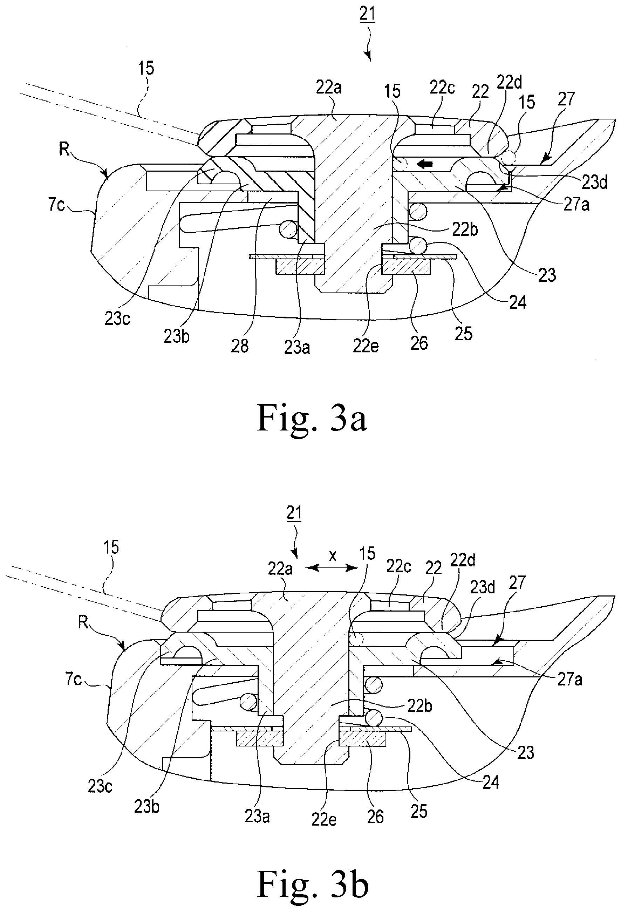

Fig. 1 shows an entire exterior view of a fishing reel according to an embodiment of the present invention; and Fig. 2 shows an exterior view of a stopper mechanism provided to a spool according to a first embodiment. Fig. 3a is a sectional view showing the stopper mechanism locking a fishing line; Fig. 3b is a sectional view showing the stopper mechanism being under load. The following descriptions will be based on a spinning reel as an example of a fishing reel.

The spinning reel 1 of this embodiment may be composed mainly of a reel body 2, a switch lever 3, a rotor 4, a bail 5, a bail supporting member 6, a spool 7, a drag knob 8, a handle 9, a handle knob 10, and a drive mechanism shown in Fig. 1 by a dashed line.

The reel body 2 may be formed of a metal, an alloy, a hard resin, or the like, and may include a casing 2a that houses the drive mechanism and the like, a leg 2b extending upwardly from the casing 2a, a rod attachment portion 2c provided at an end of the leg 2b and configured to be attached to a rod, and a tubular projection 2d formed in the front portion of the reel body 2.

The drive mechanism may transfer rotary operation of the handle 9 into rotary movement of the rotor 4 and reciprocating movement of the spool 7, thereby to wind a fishing line 15. The drive mechanism, which rotates the rotor 4, may include a drive gear 11 that rotates in association with the rotary operation of the handle 9, and a drive shaft 12 connected to the rotor 4 and having a pinion gear meshing with the drive gear 11. The drive shaft 12 may be rotatably attached to a plurality of walls or supporting portions formed in the casing 2a via bearings or the like. Further, an oscillating mechanism 14 may be provided that includes a spool shaft 13 for causing the spool 7 to reciprocate back and forth at constant strokes along the axial direction of the drive shaft 12 (the direction of X axis in Fig. 1) such that the fishing line is wound around the spool 7 to an average thickness.

The rotor 4 may include a rotary frame 4a having a tubular portion that fits around the spool 7, and a pair of arms 4b projected forward from the rotary frame 4a. Provided rotatably on respective ends of the arms 4b may be bail supporting members 6. A bail 5 may be mounted so as to bridge between these bail supporting members 6. Provided between one of the bail supporting members 6 and the bail 5 may be a line roller or the like (not shown) for guiding the fishing line 15 being wound to a line-winding body of the spool 7.

The bail supporting members 6 may be turned by a user along with the bail 5 and the bail 5 may be moved from a winding position on a side of the spool 7 to a retracted position opposite to the winding position across the spool 7, making the fishing line 15 freely releasable from the spool 7. The bail 5 may return to the winding position along with the bail supporting members 6 when the bail 5 is manually placed back from the retracted position or the handle 9 is rotationally operated.

The spool 7 may be formed of a light metal such as aluminum and may include a front flange 7a, a line-winding body 7b, and a rear flange (skirt) 7c. The spool 7 may be fitted around the spool shaft 13 and may be secured by screwing (drug setting) of the drug knob 8 screwed on the end of the shaft.

The switch lever 3 may switch between a state where the rotor 4 is reversely rotatable and a state where the rotor 4 is not reversely rotatable by using a stopper mechanism (not shown). For the rotor 4, the rotation for winding the fishing line may be in the normal direction, and the rotation for releasing the fishing line 15 may be in the reverse direction.

In the state where the rotor 4 is not reversely rotatable, the drag knob 8 may adjust a drag force (the degree of braking of the fishing line released from the spool) of a drag mechanism (not shown) for adjusting the rotation (the above reverse rotation) of the spool 7.

In the spinning reel 1, rotary operation of the handle 9 by a user may cause the drive mechanism and the oscillating mechanism 14 in the reel body 2 to operate in synchronization with each other, the oscillating mechanism 14 reciprocating the spool 7 back and forth at constant strokes, while the drive shaft 12 of the drive mechanism rotating the rotor 4. Accordingly, due to the rotational operation of the handle 9, the rotor 4 may rotate at its position in the direction of winding the fishing line, and the fishing line 15 withdrawn via the bail 5 may be wound to an average thickness around the spool 7 moving back and forth.

As shown in Figs. 1 and 2, the stopper mechanism 21 may be provided on the outer circumferential surface of the rear flange 7c of the spool 7, more specifically, on the portion of the outer circumferential surface including the edge close to the drag knob 8.

The stopper mechanism 21 will now be described with reference to Fig. 3a.

The stopper mechanism 21 may be provided on a generally planar triangular surface 27 formed in the outer circumferential surface by shaving the rear flange 7c having a cylindrical shape. A wall enclosing this generally planar surface may be sloped.

The stopper mechanism 21 may be positioned on a mounting surface 27a created within the surface 27 by shaving to a depth so as to regulate the movement. The stopper mechanism 21 includes a locking part (a line stopper) 22 having a shaft, a collar 23 fitted around the shaft, a biasing part 24 such as a spring fitted around the shaft and configured to bias the shaft in the direction opposite to the release of the fishing line, and further includes preferably washer 25 for preventing the biasing part 24 from coming off, and a retaining ring 26.

The locking part 22 may have a boss shape wherein a cylindrical shaft 22b is formed on the middle of the lower surface of a disk-like hook 22a exposed on the spool 7. The hook 22a may be provided with a plurality of holes 22c for reducing the weight while retaining the strength. Further, the lower surface (inner surface) of the hook 22a may be shaved to be hollow, leaving a rounded edge 22d. The inner surface of this hollow part may be smoothly continuous with the cylindrical shaft 22b via a curved surface. The lower part of the cylindrical shaft 22b may include a smaller diameter portion deepened from the outer circumferential surface and forming a washer groove 22e in the circumference of the shaft. The locking part 22 may be formed of a light metal such as aluminum, a hard resin, or ceramics, but are not limited thereto.

The collar 23 includes a cylindrical tube 23a fitting around the cylindrical shaft 22b of the locking part 22, a planar part 23b for receiving the fishing line 15 to be locked, and an engagement part 23c provided at the outer circumferential edge and having a semicircular curved shape with a hollow section, the engagement part 23c being configured to retain the fishing line 15 by bending. The collar 23 may be formed annularly of a soft resin or a rubber having an elastic force.

The collar 23 may be integrally mounted on the hook 22a by fitting the cylindrical tube 23a around the cylindrical shaft 22b; and the lower surface of the hook 22a may face the upper surface of the planar part 23b and the engagement part 23c of the collar 23. The engagement part 23c may be positioned high enough relative to the surface 27 such that, when the engagement part 23c bends while retaining the fishing line 15, the fishing line 15 does not contact the surface 27.

The mounting surface 27a of the spool 7 may have an elongated hole 28 for movement of the locking part 22 fitted into the collar 23. This elongated hole 28 may extend, for example, in the same axial direction as the spool shaft 13; and its length may be designated in design based on the distance traveled by the locking part 22.

Fitted into the elongated hole 28 so as to be capable of moving may be the cylindrical shaft 22b fitted into the cylindrical tube 23a. Also, the cylindrical tube 23a, which penetrates the elongated hole 28, may be provided with a coil spring 24 fitted therearound that serves as a biasing member. The coil spring 24 may abut at its end against a fixed surface provided in the spool 7 and bias the locking part 22 in the direction along the spool shaft opposite to the release of the fishing line, while biasing the hook 22a in the direction toward the surface 27 of the spool 7 via the washer 25, the retaining ring 26, and the cylindrical shaft 22b. The biasing force of the coil spring 24 may be designated based on the load presumed from the weight of fishing tackle or the like used with the reel. The biasing member may also be, for example, a plate spring or a rubber member.

Additionally, at the portion of the outer curved surface of the engagement part 23c of the collar 23 abutting against the surface 27 of the spool 7, a guide surface 23d chamfered to readily admit the fishing line 15 to the planar part 23b inside the engagement part 23c may be formed in the outer circumferential edge of the engagement part 23. If the surface 27 of the spool 7 is also provided with a chamfered guide surface, the fishing line 15 can be more smoothly admitted to the planar part 23b.

The functions of the stopper mechanism 21 as configured above will now be described.

In fishing, a user may hook the fishing line 15 on the hook 22a at the point where a fish was caught or at a fishing depth and draw the fishing line inwardly from the engagement part 23c of the collar 23 via the guide surface 23d to lock it on the planar part 23b. As shown in Fig. 1, the fishing line 15 at this moment may run from the spool 7 into the stopper mechanism 21 obliquely with respect to the spool shaft, hook on the hook 22a, and return obliquely. The user may rotate the handle 10 with the fishing line 15 locked, such that the bail 5 is rotated and the fishing line 15 is wound around the spool 7.

Next, to cast fishing tackle or adjust the fishing depth, the user may turn the bail 5 back such that the fishing line 15 is freely released from the spool 7. When the fishing line 15 is released to the locked point, the fishing line 15 may be subjected to a load caused by the cast fishing tackle; and the locking part 22 may be moved integrally with the collar 23 in the direction of releasing the fishing line (the spool shaft direction, or X axis direction) while locking the fishing line 15. At this moment, the fishing line 15 may be moved in the direction of release along with the hook 22a of the locking part 22 and the planar part 23b of the collar 23 while being held therebetween, without contacting the surface 27 of the spool 7. In this movement, the coil spring 24 serving as a biasing member may exercise a biasing force in the direction opposite to the release of the fishing line and lower the moving speed (momentum) of the locking part 22, such that the load is gently imparted on the fishing line 15.

According to the embodiments described above, the fishing line 15 may be held between the hook 22a of the locking part and the collar 23 moving integrally, and may not contact the surface or edge of the spool 7. Therefore, the fishing line 15 may not be scratched. Therefore, there is no necessity of a careful surface treatment on the spool 7 (removal of burr and rounding of corners) that used to be necessary because the fishing line contacts the spool 7.

Additionally, the guide surface 23d may be provided across the engagement part 23c of the collar 23 and the surface of the spool 7 contacting therewith, in particular, in the peripheral edge of the collar 23, such that the fishing line can be readily inserted from the engagement part 23c and locked by the bending of the engagement part 23c of the collar 23.

Locking the fishing line 15 on the spool 7 may enable repeatedly reaching a same preferable point in casting fishing tackle or adjusting the fishing depth; and movement of the locking part relieves the load on the fishing line and prevents damages on the fishing line 15 such as stretching and twisting. Further, the fishing line does not contact the spool 7 even when the locking part 22 is moved; therefore the fishing line can be prevented from being damaged by rubbing, which used to be a problem.

Embodiments of the present invention have been described with particular reference to the examples illustrated. However, it will be appreciated that variations and modifications may be made to the examples described within the scope of the present invention.

## Claims

1. A fishing reel having a spool for winding a fishing line, comprising:
a hook (22a) positioned on a portion of an outer circumferential surface (27) of the spool (7) where no fishing line (15) is wound, the hook (22a) being configured to be movable in a direction of releasing the fishing line (15);
a collar (23) provided between the hook (22a) and the outer circumferential surface (27) of the spool (7), the collar (23) being configured to lock the fishing line (15) in cooperation with the hook (22a) ; and
a biasing part (24) configured to bias the hook (22a) and the collar (23) in a direction opposite to a direction of releasing the fishing line (15),
wherein, when the fishing line (15) is released to a locked point where the fishing line (15) is locked between the hook (22a) and the collar (23), the hook (22a) and the collar (23) are moved integrally with the fishing line (15) in the direction of releasing the fishing line (15) under a biasing force produced by the biasing part (24), and
wherein
the collar (23) faces the lower surface of the hook (22a) and comprises:
a cylindrical tube (23a) fitting around a shaft (22b) provided on the hook (22a);
a planar part (23b) for receiving the fishing line (15) being locked; and
an engagement part (23c) provided in periphery and having a semicircular curved shape with a hollow section, the engagement part (23c) being configured to retain the fishing line (15) by bending,
and the engagement part (23c) is positioned high enough such that, when the engagement part (23c) bends while retaining the fishing line (15), the fishing line (15) does not contact the outer circumferential surface (27) of the spool (7).

2. A fishing reel according to claim 1, wherein
the collar (23) is positioned on a mounting surface (27a), the mounting surface (27a) being formed in the outer circumferential surface (27) of the spool (7) so as to make a lower step,
and the engagement part (23c) of the collar (23) has, at a peripheral edge thereof, a guide surface (23d) for admitting the fishing line (15) smoothly to inside the engagement part (23c).

3. A method of operating a fishing line on a fishing reel having a spool comprising a hook (22a) positioned on a portion of an outer circumferential surface (27) of the spool (7) where no fishing line (15) is wound, the hook (22a) being configured to be movable in a direction of releasing the fishing line (15), and a collar (23) provided between the hook (22a) and the outer circumferential surface (27) of the spool (7), the collar (23) being configured to lock the fishing line (15) in cooperation with the hook (22a), the method comprising:
biasing the hook (22a) and the collar (23) in a direction opposite to a direction of releasing the fishing line (15); and,
when the fishing line (15) is released to a locked point where the fishing line (15) is locked between the hook (22a) and the collar (23), moving the hook (22a) and the collar (23) integrally with the fishing line (15) in the direction of releasing the fishing line (15) under a biasing force, and
wherein
the collar (23) faces the lower surface of the hook (22a) and comprises:
a cylindrical tube (23a) fitting around a shaft (22b) provided on the hook (22a);
a planar part (23b) for receiving the fishing line (15) being locked; and
an engagement part (23c) provided in periphery and having a semicircular curved shape with a hollow section, the engagement part (23c) being configured to retain the fishing line (15) by bending,
and the engagement part (23c) is positioned high enough such that, when the engagement part (23c) bends while retaining the fishing line (15), the fishing line (15) does not contact the outer circumferential surface (27) of the spool (7).

## Patentansprüche

1. Angelrolle mit einer Spule zum Wickeln einer Angelschnur, beinhaltend:
einen Haken (22a), der an einem Abschnitt einer äußeren Umfangsfläche (27) der Spule (7) positioniert ist, wo keine Angelschnur (15) gewickelt wird, wobei der Haken (22a) konfiguriert ist, um in einer Richtung des Lösens der Angelschnur (15) bewegbar zu sein;
einen Kragen (23), der zwischen dem Haken (22a) und der äußeren Umfangsfläche (27) der Spule (7) bereitgestellt ist, wobei der Kragen (23) konfiguriert ist, um die Angelschnur (15) in Zusammenwirkung mit dem Haken (22a) zu arretieren; und
einen Vorspannteil (24), der konfiguriert ist, um den Haken (22a) und den Kragen (23) in einer Richtung entgegengesetzt zu einer Richtung des Lösens der Angelschnur (15) vorzuspannen,
wobei die Angelschnur (15) zu einem arretierten Punkt gelöst wird, wo die Angelschnur (15) zwischen dem Haken (22a) und dem Kragen (23) arretiert wird, wobei der Haken (22a) und der Kragen (23) integral mit der Angelschnur (15) in der Richtung des Lösens der Angelschnur (15) unter einer durch den Vorspannteil (24) produzierten Vorspannkraft bewegt werden, und wobei
der Kragen (23) zur unteren Oberfläche des Hakens (22a) weist und Folgendes beinhaltet:
ein zylindrisches Rohr (23a), das um eine am Haken (22a) bereitgestellte Welle (22b) passt; einen ebenen Teil (23b) zum Aufnahmen der Angelschnur (15), die arretiert ist; und einen Eingriffsteil (23c), der an der Peripherie bereitgestellt ist und eine halbkreisförmige gekrümmte Form mit einem Hohlprofil aufweist, wobei der Eingriffsteil (23c) konfiguriert ist, um die Angelschnur (15) durch Biegen festzuhalten,
und der Eingriffsteil (23c) hoch genug positioniert ist, sodass, wenn sich der Eingriffsteil (23c) während des Festhaltens der Angelschnur (15) biegt, die Angelschnur (15) die äußere Umfangsfläche (27) der Spule (7) nicht berührt.

2. Angelrolle gemäß Anspruch 1, wobei
der Kragen (23) auf einer Befestigungsfläche (27a) positioniert ist, wobei die Befestigungsfläche (27a) in der äußeren Umfangsfläche (27) der Spule (7) ausgebildet ist, um eine untere Stufe herzustellen,
und der Eingriffsteil (23c) des Kragen (23), an einer peripheren Kante davon, eine Führungsfläche (23d) zum glatten Einlassen der Angelschnur (15) in die Innenseite des Eingriffsteils (23c) aufweist.

3. Verfahren zum Betreiben einer Angelschnur auf einer Angelrolle mit einer Spule zum Wickeln einer Angelschnur, beinhaltend einen Haken (22a), der an einem Abschnitt einer äußeren Umfangsfläche (27) der Spule (7) positioniert ist, wo keine Angelschnur (15) gewickelt wird, wobei der Haken (22a) konfiguriert ist, um in einer Richtung des Lösens der Angelschnur (15) bewegbar zu sein, einen Kragen (23), der zwischen dem Haken (22a) und der äußeren Umfangsfläche (27) der Spule (7) bereitgestellt ist, wobei der Kragen (23) konfiguriert ist, um die Angelschnur (15) in Zusammenwirkung mit dem Haken (22a) zu arretieren, wobei das Verfahren Folgendes beinhaltet:
Vorspannen des Hakens (22a) und des Kragen (23) in einer Richtung entgegengesetzt zu einer Richtung des Lösens der Angelschnur (15); und,
wenn die Angelschnur (15) zu einem arretierten Punkt gelöst wird, wo die Angelschnur (15) zwischen dem Haken (22a) und dem Kragen (23) arretiert wird, Bewegen des Hakens (22a) und des Kragens (23) integral mit der Angelschnur (15) in der Richtung des Lösens der Angelschnur (15) unter einer Vorspannkraft, und wobei
der Kragen (23) zur unteren Oberfläche des Hakens (22a) weist und Folgendes beinhaltet:
ein zylindrisches Rohr (23a), das um eine am Haken (22a) bereitgestellte Welle (22b) passt; einen ebenen Teil (23b) zum Aufnahmen der Angelschnur (15), die arretiert ist; und einen Eingriffsteil (23c), der an der Peripherie bereitgestellt ist und eine halbkreisförmige gekrümmte Form mit einem Hohlprofil aufweist, wobei der Eingriffsteil (23c) konfiguriert ist, um die Angelschnur (15) durch Biegen festzuhalten,
und der Eingriffsteil (23c) hoch genug positioniert ist, sodass, wenn sich der Eingriffsteil (23c) während des Festhaltens der Angelschnur (15) biegt, die Angelschnur (15) die äußere Umfangsfläche (27) der Spule (7) nicht berührt.

## Revendications

1. Moulinet de pêche équipé d'un tambour pour l'enroulement d'une ligne de pêche, comprenant :
un crochet (22a) positionné sur une partie d'une surface circonférentielle extérieure (27) du tambour (7) sur laquelle aucune ligne de pêche (15) n'est enroulée, le crochet (22a) étant configuré pour pouvoir être déplacé dans une direction de déblocage de la ligne de pêche (15) ;
un collet (23) placé entre le crochet (22a) et la surface circonférentielle extérieure (27) du tambour (7), le collet (23) étant configuré pour bloquer la ligne de pêche (15) de façon solidaire avec le crochet (22a) ; et
un dispositif de sollicitation (24) configuré pour solliciter le crochet (22a) et le collet (23) dans une direction opposée à une direction de déblocage de la ligne de pêche (15),
de sorte que lorsque la ligne de pêche (15) est libérée jusqu'à un point de verrouillage, où ligne de pêche (15) est bloquée entre le crochet (22a) et le collet (23), le crochet (22a) et le collet (23) se déplacent de façon solidaire avec la ligne de pêche (15) dans la direction de relâchement de la ligne de pêche (15), sous une force de sollicitation produite par le dispositif de sollicitation (24), et
le collier faisant face à la surface inférieure du crochet (22a), et comprenant :
un tube cylindrique (23a) s'emmanchant autour d'un axe (22b) pratiqué sur le crochet (22a) ;
une pièce plane (23b) pour recevoir la ligne de pêche (15) étant bloquée ; et
une pièce d'engagement (23c) étant placée sur le pourtour et présentant une forme courbe semi-circulaire avec une section creuse, la pièce d'engagement (23c) étant configurée de façon à retenir la ligne de pêche (15) en fléchissant, et
la pièce d'engagement (23c) étant positionnée à une hauteur suffisante de sorte que lors du fléchissement de la pièce d'engagement (23c) pour retenir la ligne de pêche (15), la ligne de pêche (15) n'est jamais en contact avec la surface circonférentielle extérieure (27) du tambour (7).

2. Moulinet de pêche selon la revendication 1, dans lequel
le collet (23) est positionné sur une surface de montage (27a), la surface de montage (27a) étant formée dans la surface circonférentielle extérieure (27) du tambour (7) se façon à former un gradin inférieur, et
la pièce d'engagement (23c) du collet (23) présentant, sur un bord périphérique de celui-ci, une surface de guidage (23d) permettant d'introduire en douceur la ligne de pêche (15) à l'intérieur de la pièce d'engagement (23c).

3. Méthode d'utilisation d'une ligne de pêche sur un moulinet de pêche muni d'un tambour comprenant un crochet (22a) positionné sur une partie d'une surface circonférentielle extérieure (27) du tambour (7) sur laquelle aucune ligne de pêche (15) n'est enroulée, le crochet (22a) étant configuré pour pouvoir être déplacé dans une direction de déblocage de la ligne de pêche (15), et un collet (23) placé entre le crochet (22a) et la surface circonférentielle extérieure (27) du tambour (7), le collet (23) étant configuré pour bloquer la ligne de pêche (15) de façon solidaire avec le crochet (22a), la méthode comprenant :
la sollicitation du crochet (22a) et du collet (23) dans une direction opposée à une direction de déblocage de la ligne de pêche (15) ; et
lorsque la ligne de pêche (15) est libérée jusqu'à un point de blocage où la ligne de pêche est bloquée (15) entre le crochet (22a) et le collet (23), le déplacement du crochet (22a) et du collet (23) de façon solidaire avec la ligne de pêche (15) dans la direction de relâchement de la ligne de pêche (15), sous une force de sollicitation, et
le collet (23) faisant face à la surface inférieure du crochet (22a) et comprenant :
un tube cylindrique (23a) s'emmanchant autour d'un axe (22b) pratiqué sur le crochet (22a) ;
une pièce plane (23b) pour recevoir la ligne de pêche (15) étant bloquée ; et
une pièce d'engagement (23c) étant placée sur le pourtour et présentant une forme courbe semi-circulaire avec une section creuse, la pièce d'engagement (23c) étant configurée de façon à retenir la ligne de pêche (15) en fléchissant,
et la pièce d'engagement (23c) étant positionnée à une hauteur suffisante de sorte que lors du fléchissement de la pièce d'engagement (23c) pour retenir la ligne de pêche (15), la ligne de pêche (15) n'est jamais en contact avec la surface circonférentielle extérieure (27) du tambour (7).
